# EUROPEAN PATENT APPLICATION

(11) **EP 4 683 310 A1**
(43) Date of publication of application: **21.01.2026**
(21) Application number: 24775051.6
(22) Date of filing: 23.01.2024
(51) Int. Cl.: H04M 1/72415, H04N 23/661, H04N 23/65, H04N 23/667

(54) **ELECTRONIC DEVICE CONNECTED TO EXTERNAL CAMERA AND OPERATION METHOD THEREFOR**

(30) Priority: 17.03.2023 KR 20230035463; 18.05.2023 KR 20230064409
(71) Applicant: Samsung Electronics Co., Ltd., Suwon-si, Gyeonggi-do 16677 (KR)
(72) Inventor: PARK, Kwangkyu, Suwon-si, Gyeonggi-do 16677 (KR); KANG, Changhoon, Suwon-si, Gyeonggi-do 16677 (KR); CHO, Sangheum, Suwon-si, Gyeonggi-do 16677 (KR); CHOI, Byounggeun, Suwon-si, Gyeonggi-do 16677 (KR)
(74) Representative: Gulde & Partner
(86) International application number: PCT/KR2024/001078
(87) International publication number: WO 2024/196003

(57) **Abstract**

An electronic device according to an embodiment may include a camera, a communication circuit which communicates with an external electronic device equipped with an external camera, a memory which stores an application providing a function using the camera, and at least one processor electrically coupled with the camera, the communication circuit, and the memory. The at least one processor may be configured to, while the application is running, establish a connection between the electronic device and the external electronic device through the communication circuit, upon detecting a first capture command to be provided to the camera, convert the first capture command into a second capture command to be provided to the external electronic device, and cause the application to acquire an image acquired by the external camera, based on the second capture command. Various other embodiments are possible.

## Description

### [Technical Field]

The disclosure relates to an electronic device coupled to an external camera, and a method of operating the electronic device.

### [Background Art]

A smartphone provides various applications (e.g., video telephony, video conference, or photography) using a camera. Since the camera is essentially embedded in the smartphone, the smartphone may independently provide the aforementioned application function without a separate external camera device.

Meanwhile, similar to the Internet of Things (IoT), the smartphone may interwork with various external devices for the purpose of scalability. In this case, the smartphone may need a separate interface that supports a protocol required by the external device in order to control the external device.

For example, when a user intends to use video acquired from a webcam by coupling the smartphone and the webcam, it may be necessary to install a separate application for the webcam or, at least to perform a process of converting code to control the webcam.

However, a control interface provided by the existing application, rather than the separate application, is often incompatible with external camera devices. As a result, when the webcam is used through the existing application, a function desired by the user may not be provided.

The aforementioned information may be provided as related art for the purpose of facilitating understanding of the disclosure. No claim or decision is made as to whether any of the aforementioned content is applicable as the prior art related to the disclosure.

### [Disclosure of Invention]

### [Solution to Problem]

An electronic device according to an embodiment may include a camera, a communication circuit which communicates with an external electronic device equipped with an external camera, a memory which stores an application providing a function using the camera, and at least one processor electrically coupled with the camera, the communication circuit, and the memory.

The electronic device according to an embodiment may be configured to, while the application is running, establish a connection between the electronic device and the external electronic device through the communication circuit. The electronic device may be configured to, upon detecting a first capture command to be provided to the camera, convert the first capture command into a second capture command to be provided to the external electronic device. The electronic device may be configured to cause the application to acquire an image acquired by the external camera, based on the second capture command.

A method of operating an electronic device according to an embodiment may include, while an application is running, establishing a connection between the electronic device and an external electronic device including an external camera. The method of operating the electronic device may include, upon detecting a first capture command to be provided to the camera, converting the first capture command into a second capture command to be provided to the external electronic device. The method of operating the electronic device may include causing the application to acquire an image acquired by the external camera, based on the second capture command.

### [Brief Description of Drawings]

FIG. 1 is a block diagram of an electronic device in a network environment according to various embodiments;
FIG. 2 is a block diagram exemplifying a program according to various embodiments;
FIG. 3 illustrates an output screen of an application in a connected state between an electronic device according to the related art and an external electronic device;
FIG. 4 is a block diagram illustrating an example in which an electronic device according to an embodiment is coupled to an external electronic device to convert data;
FIG. 5 is a block diagram illustrating an example in which an electronic device according to an embodiment detects a connection of an external electronic device;
FIG. 6 is a block diagram illustrating an example of converting a capture command, metadata, and an image between an electronic device according to an embodiment and an external electronic device;
FIG. 7 is a flowchart illustrating a process in which an electronic device according to an embodiment notifies a user of a connection with an external electronic device, based on a user input;
FIG. 8 is a diagram referenced by the flowchart of FIG. 7;
FIG. 9 is a flowchart illustrating a process performed by an electronic device according to an embodiment when it is disconnected from an external electronic device;
FIG. 10 is a flowchart illustrating a process in which an electronic device according to an embodiment switches a camera to a low-power mode in a state of being coupled to an external electronic device;
FIG. 11 is a flowchart illustrating a process in which an electronic device according to an embodiment generates a new capture command to be provided to an external electronic device;
FIG. 12 is a flowchart illustrating a process in which an electronic device according to an embodiment converts an image acquired from an external electronic device;
FIG. 13 is a flowchart illustrating a process in which an electronic device according to an embodiment converts metadata corresponding to an external electronic device; and
FIG. 14 illustrates an example in which an electronic device according to an embodiment establishes a connection with an external electronic device, and a camera is switched to change an output screen.

### [Mode for the Invention]

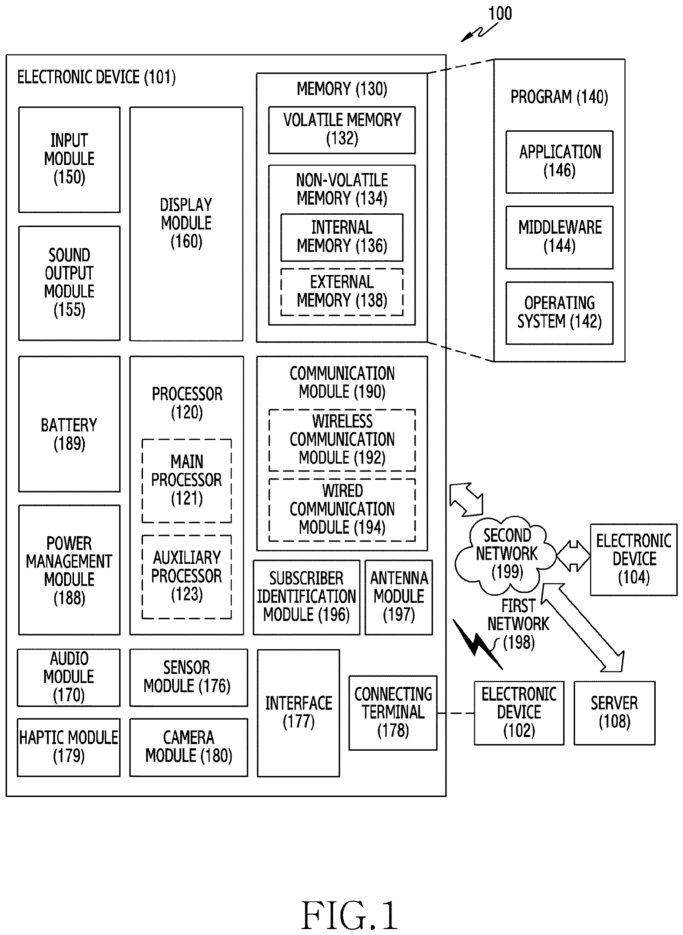

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

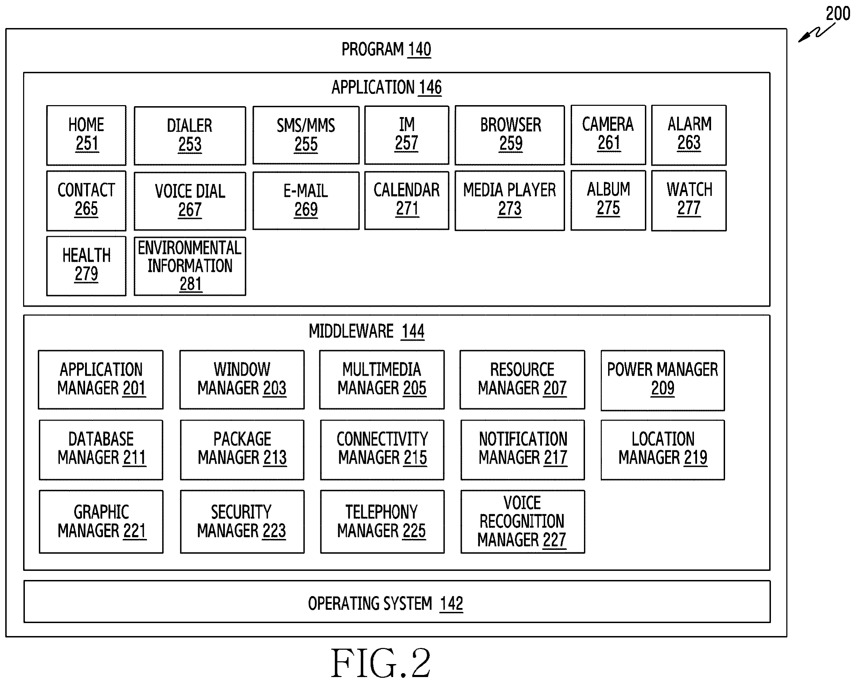

Fig. 2 is a block diagram 200 illustrating the program 140 according to various embodiments. According to an embodiment, the program 140 may include an operating system (OS) 142 to control one or more resources of the electronic device 101, middleware 144, or an application 146 executable in the OS 142. The OS 142 may include, for example, AndroidTM, iOSTM, WindowsTM, SymbianTM, TizenTM, or BadaTM. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130.The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, dialer 253, short message service (SMS)/multimedia messaging service (MMS) 255, instant message (IM) 257, browser 259, camera 261, alarm 263, contact 265, voice recognition 267, email 269, calendar 271, media player 273, album 275, watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., adjustment of brightness, resolution, or focus) of the external electronic device or some component thereof (e.g., a display module or a camera module of the external electronic device). The device management application, additionally or alternatively, may support installation, delete, or update of an application running on the external electronic device.

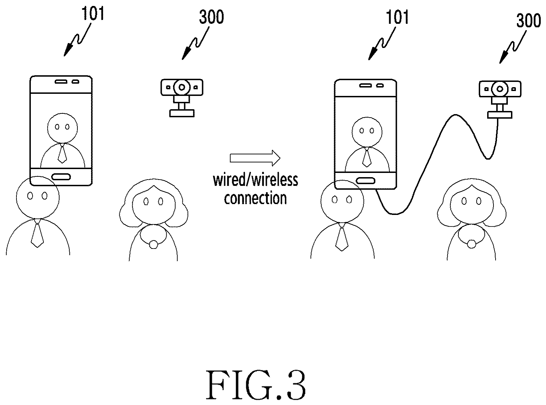

FIG. 3 illustrates an output screen of an application in a connected state between an electronic device according to the related art and an external electronic device.

Prior to the description according to the related art and the disclosure, several terms used herein will be clearly defined.

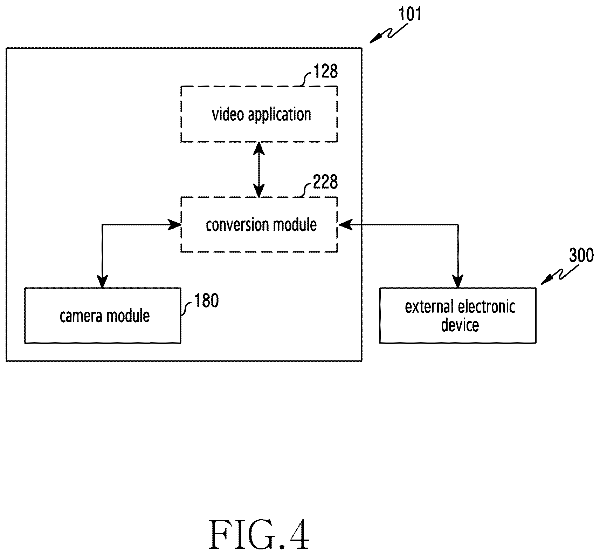

A video application 128 (see FIG. 4) may be pre-installed on an electronic device 101 to provide an image captured through the camera module 180 (see FIG. 1) embedded in the electronic device 101, and may refer to any application other than applications developed for an external electronic device 300. For example, the video application 128 may include a camera application, a video telephony-related application, a video conference-related application, and a video streaming-related application, but is not limited thereto.

The external electronic device 300 may include a device equipped with an external camera (not shown) and capable of performing various functions related to image capturing. The external electronic device 300 may be controlled through a wired or wireless connection with a different electronic device, and may provide an image acquired by the external electronic device 300 to the different electronic device. For example, the external electronic device 300 may refer to a device coupled with another electronic device such as a webcam and a laptop or monitor equipped with a camera module to provide the image acquired by the external electronic device 300.

An external camera embedded in the external electronic device 300 may include an independent camera module provided separately from the electronic device 101. In addition to the wired connection, such as the webcam, the external electronic device 300 may be coupled to the electronic device 101 through a wireless IoT connection, such as Matter/SmartThings, or a device-specific proprietary protocol.

The external electronic device 300 may include a separate interface for controlling the external camera integrally embedded therein. The interface of the external device has a different format than an Application Programming Interface (API) for controlling the camera module 180 of the electronic device 101. In order for the electronic device 101 to control the external camera, it may be necessary to implement additional code in the video application 128 (e.g., a UVC protocol for a webcam, a Web API for an IP CCTV, or a separate SDK provided by an IoT service for IoT equipment).

The video application 128 is generally developed to operate only a front camera module and/or a rear camera module that are fixedly installed in the electronic device 101, and may be implemented without consideration of interworking with other cameras. Therefore, as shown in FIG. 3, even if the electronic device 101 is coupled to the external electronic device 300 which includes the external camera, the image provided by the electronic device 101 is acquired from the camera module 180 of the electronic device 101, and the video application 128 may not be able to provide the image acquired by the external electronic device 300.

In addition, since the video application 128 does not include an interface and/or protocol for controlling the external camera embedded in the external electronic device 300, it may not be possible to control the external electronic device 300 unless a separate application for the external electronic device 300 is used for the control or the video application 128 is separately updated.

In an embodiment of the disclosure, when means for operating the external electronic device 300 are not implemented in the video application 128, an operating system of the electronic device 101 may determine whether the external electronic device 300 is available for use and, if a user accepts the use of the external electronic device 300, the operating system of the electronic device 101 may directly control the external electronic device 300.

The electronic device 101 according to an embodiment of the disclosure may perform various conversion processes in order to compensate for differences in operation methods of capture commands, images, and metadata relating to capture results, which occur due to differences in functions or specifications between the camera module 180 and the external camera of the external electronic device 300. According to an embodiment of the disclosure, although the video application 128 in practice controls the camera module 180 of the electronic device 101, the user may be allowed to control and use the external camera of the external electronic device 300 through the video application 128.

FIG. 4 is a block diagram illustrating an example in which an electronic device according to an embodiment is coupled to an external electronic device to convert data.

An electronic device 101 may receive an image acquired from an external electronic device 300 through the communication module 190 (see FIG. 1). While a video application 128 stored in the memory 130 (see FIG. 1) is running, the processor 120 (see FIG. 1) of the electronic device 101 may execute a conversion module 228 to convert an image received from the external electronic device 300.

Referring to FIG. 4, the electronic device 101 according to an embodiment may have the conversion module 228 included in a framework of the operating system 142 (see FIG. 2).

When an interface and/or protocol for the external electronic device 300 is not implemented in the video application 128, the conversion module 228 according to an embodiment may acquire (or receive), at an intermediate stage, a command delivered from the video application 128 to the camera module 180. The conversion module 228 according to an embodiment may convert an image and/or metadata, i.e., a result acquired from the external electronic device 300, based on the command delivered to the camera module 180, and provide the converted data to the video application 128. The conversion module 228 according to an embodiment may convert a capture command, the image, and/or the metadata in consideration of differences in functions and/or specifications between the camera module 180 and an external camera included in the external electronic device 300.

The video application 128 provides a command for controlling the camera module 180 as in the conventional manner. However, the electronic device 101 according to an embodiment may include the conversion module 228 to acquire (or receive) the command provided from the video application 128 at an intermediate stage and deliver the command to the external electronic device 300. For example, the electronic device 101 according to an embodiment may be implemented to provide a command generated by the video application 128 to the external electronic device 300 through the conversion module 228, so that a result value (image and/or metadata) acquired by the external electronic device 300 is delivered to the video application 128. The video application 128 or the conversion module 228 may be software including at least one instruction which may be stored in the memory 130. The processor 120 (see FIG. 1) according to an embodiment may execute the video application 128 or the conversion module 228, i.e., software stored in the memory 130. In this case, an operation of the video application 128 or conversion module 228 may be interpreted as an operation of the processor 120.

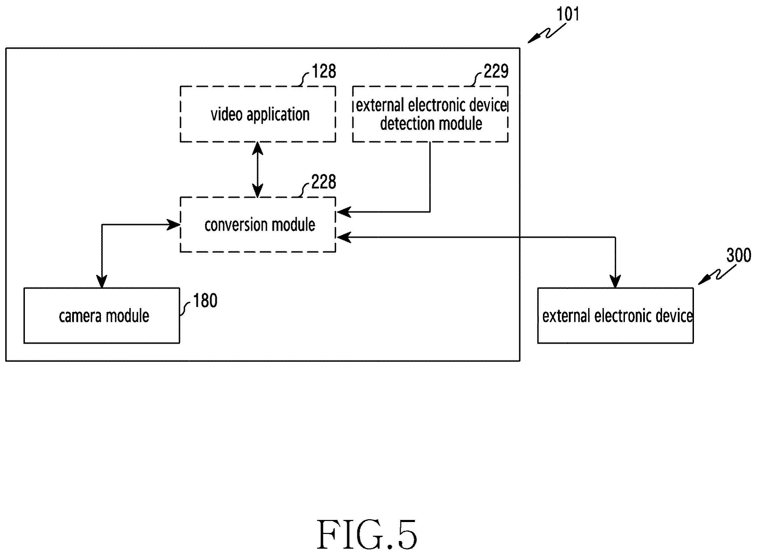

FIG. 5 is a block diagram illustrating an example in which an electronic device according to an embodiment detects a connection of an external electronic device.

An electronic device 101 according to an embodiment may further include an external electronic device detection module 229. When an external electronic device 300 is coupled to the electronic device 101 in a wired/wireless manner, the external electronic device detection module 229 according to an embodiment may notify a user of this by providing a separate UI. In this case, upon receiving a user input for establishing a connection between the electronic device 101 and the external electronic device 300 through the user, the electronic device 101 may provide a conversion command to a conversion module 228, and may control the external electronic device 300, based on the command delivered through a video application 128.

The conversion module 228 according to an embodiment may generate the conversion command in response to a signal produced by the external electronic device detection module 229. When the conversion command is produced, the electronic device 101 according to an embodiment may perform a conversion process so that the external electronic device 300 is controlled in place of a camera module 180 being used by the video application 128.

The conversion module 228 according to an embodiment may acquire (or receive), at an intermediate stage, a command delivered to a framework of an operating system through a camera API in order for the video application 128 to use the camera module 180, may modify at least part of the acquired command according to functions and/or specifications of the external camera included in the external electronic device 300 and deliver the modified command to the interface of the external camera, and may cause the external camera to operate, based on the modified command.

When the image acquired from the external camera is delivered, the conversion module 228 according to an embodiment may perform an image conversion operation in consideration of differences in specifications (e.g., field of view, format, resolution, aspect ratio, and/or layout orientation) with respect to the electronic device 101. As an image conversion process, the conversion module 228 according to an embodiment may perform at least one of Crop, Scaling, Color Convert, Rotate, and/or Encoding. The conversion module 228 according to an embodiment may provide the video application 128 with the converted image in place of the image acquired by the camera module 180.

The conversion module 228 according to an embodiment may convert metadata for the image acquired from the external camera into a format compatible with the camera module 180, and may provide the video application 128 with the converted metadata in place of the metadata of the camera module 180. The processor 120 according to an embodiment may execute the conversion module 228 so that the video application 128 is able to acquire the converted metadata.

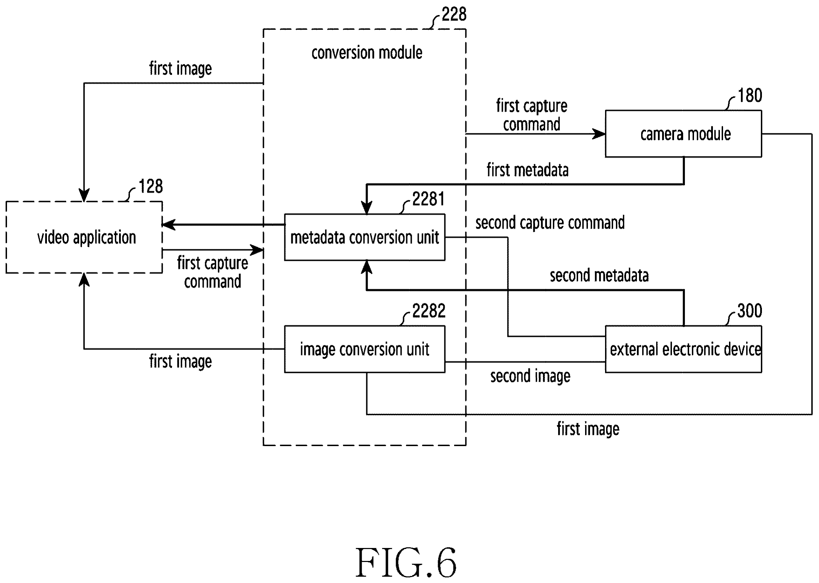

FIG. 6 is a block diagram illustrating an example of converting a capture command, metadata, and an image between an electronic device according to an embodiment and an external electronic device.

An electronic device 101 according to an embodiment may provide a conversion module 228 with a first capture command through an interface of a video application 128. The first capture command is a command for causing the video application 128 to control a camera module 180 of the electronic device 101, but may be converted (or generated) into a second capture command by the conversion module 228 and transmitted to an external electronic device 300. The first capture command may be produced by a user input provided by a user through an interface, but may be a command automatically produced by the video application 128 being executed, regardless of the user input.

Upon generating the first capture command through the video application 128, the electronic device 101 according to an embodiment may deliver the first capture command to the conversion module 228. The electronic device 101 according to an embodiment may cause the conversion module 228 to deliver the first capture command to the camera module 180, and may cause the conversion module 228 to convert the first capture command into the second capture command and deliver it. The second capture command is a command transmitted to control the external electronic device 300, and may include a control command for causing the external electronic device 300 to perform a function corresponding to the function performed in response to the first capture command.

The conversion module 228 according to an embodiment may include a metadata conversion unit 2281 and an image conversion unit 2282.

Upon receiving the first capture command from the video application 128, the conversion module 228 may compare the presence or absence of functional modes between the camera module 180 and the external electronic device 300 to add any missing commands and to perform a fallback and/or emulating process on unsupported commands, thereby converting the first capture command into the second capture command. An operation of converting the first capture command into the second capture command may include an operation of modifying the first capture command into the second capture command or an operation of generating the second capture command, based on the first capture command.

The metadata conversion unit 2281 may convert the second metadata, which is a result value for a capture result provided by the external electronic device 300, into a format compatible with the camera module 180, and may provide the converted metadata to the video application 128.

Upon receiving a second image, which is a capture image acquired by the external electronic device 300 based on the first capture command, the image conversion unit 2282 may convert the second image into a first image so as to conform to specifications of the video application 128 and/or camera module 180. An operation of converting the second image into the first image may include an operation of modifying the first image into the second image or an operation of generating the second image based on the first image. For example, the image conversion unit 2282 may perform operations such as Crop, Scaling, Color Convert, Rotate, and/or Encoding, based on at least some of field of view, format, resolution, aspect ratio, and/or layout orientation between the camera module 180 and the external camera of the external electronic device 300, and may provide the second image which replaces the image of the camera module 180 delivered to the video application 128. For example, the second image may replace the first image provided by the video application 128 by being overwritten to a buffer of the first image.

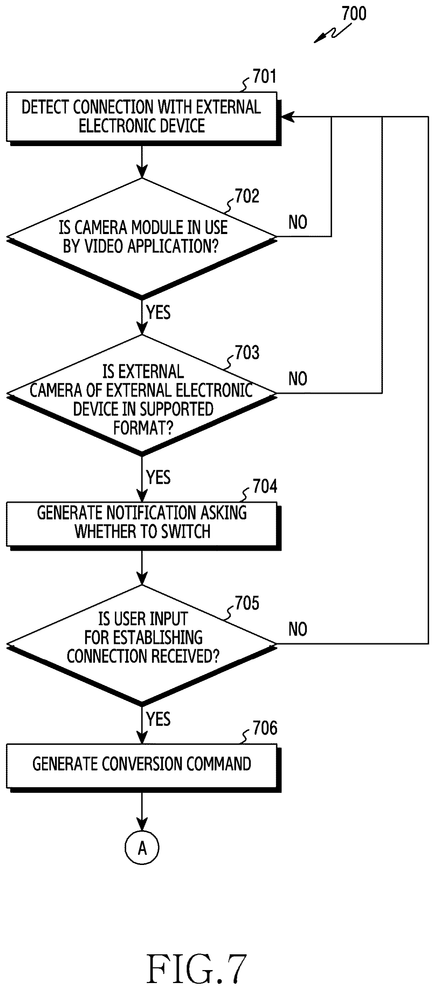

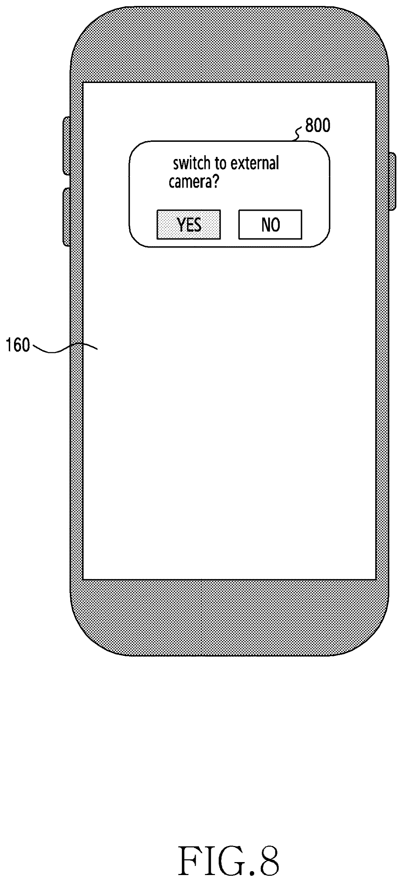

FIG. 7 is a flowchart 700 illustrating a process in which an electronic device according to an embodiment notifies a user of a connection with an external electronic device, based on a user input. FIG. 8 is a diagram referenced by the flowchart 700 of FIG. 7. Each operation of FIG. 7 may be at least one operation performed by the electronic device 101 by being executed by the processor 120 (see FIG. 1).

The electronic device 101 according to an embodiment may detect a connection with the external electronic device 300 (operation 701). The electronic device 101 according to an embodiment may detect that the external electronic device 300 is wiredly/wirelessly coupled to the electronic device 101 through the external electronic device detection module 229 (see FIG. 5).

If the camera module 180 is in use by the video application 128 (Yes in operation 702), the electronic device 101 according to an embodiment may determine whether an external camera of the external electronic device 300 is in a format supported by the electronic device 101 (operation 703).

If the external camera of the external electronic device 300 is a device of a supported format capable of providing an image to the video application 128 (Yes in operation 703), the electronic device 101 according to an embodiment may generate a notification asking whether to switch (operation 704). The notification asking whether to switch may be provided through a system UI of the electronic device 101, but is not limited thereto. The user may switch the camera used for acquiring an image through the UI provided by the system. For example, the switching herein does not necessarily mean that the device for acquiring the image is entirely (e.g., physically) replaced from the camera module 180 to the external electronic device 300, but may instead mean that at least part of a capture command provided to the camera module 180 is delivered to the external electronic device 300 through the conversion module 228.

Referring to FIG. 8, a notification 800 based on the operation 704 may be provided as a UI which allows the user to select whether to establish a connection. The user may select whether to establish a connection with the external electronic device 300 through the UI provided by the electronic device 101. Although the UI of the notification 800 is exemplified as a popup window according to an embodiment, the UI of the notification 800 is not limited thereto and may include various forms and/or types.

If the user receives a selection command for establishing the connection (Yes in operation 705), the electronic device 101 according to an embodiment may establish the connection with the external electronic device 300, and may cause the conversion module 228 to generate a conversion command (operation 706).

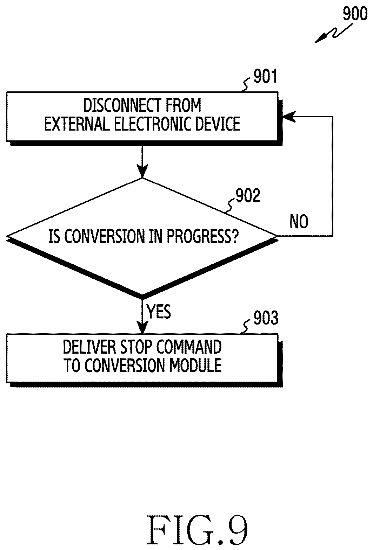

FIG. 9 is a flowchart 900 illustrating a process performed by an electronic device according to an embodiment when it is disconnected from an external electronic device. Each operation of FIG. 9 may be at least one operation performed by the electronic device 101 by being executed by the processor 120 (see FIG. 1).

The electronic device 101 according to an embodiment may be disconnected from the external electronic device 300 (operation 901). The electronic device 101 according to an embodiment may be disconnected from the external electronic device 300 when a user terminates the video application 128, or when a camera is switched from an external camera of the external electronic device 300 to the camera module 180 of the electronic device 101.

If a conversion is in progress through the conversion module 228 (operation 902), the electronic device 101 according to an embodiment may deliver a stop command to the conversion module 228 (operation 903). Upon receiving the stop command, the conversion module 228 according to an embodiment may not perform the conversion process even if a first capture command is received from the video application 128, and may not even deliver a second capture command to the external electronic device 300.

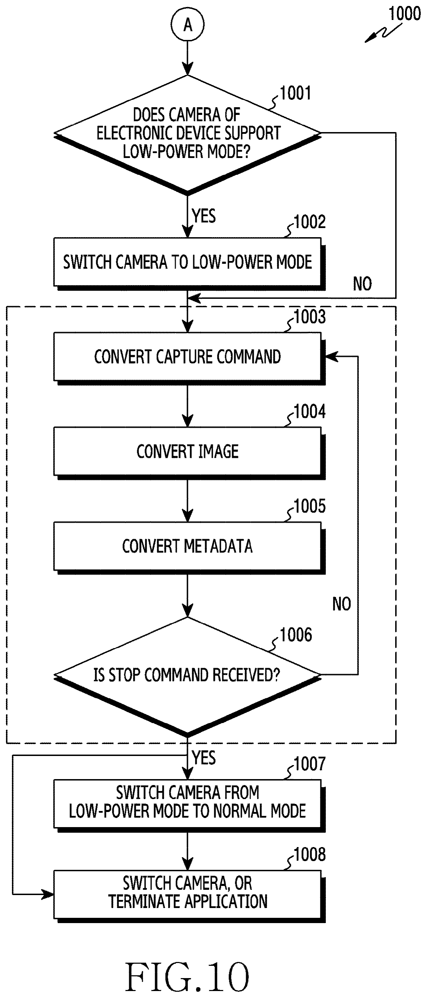

FIG. 10 is a flowchart 1000 illustrating a process in which an electronic device according to an embodiment switches a camera to a low-power mode in a state of being coupled to an external electronic device. Each operation of FIG. 10 may be at least one operation performed by the electronic device 101 by being executed by the processor 120 (see FIG. 1).

If the camera module 180 of the electronic device 101 supports a low-power mode (Yes in operation 1001), the electronic device 101 according to an embodiment may switch the camera module 180 to the low-power mode (operation 1002). When a connection between the electronic device 101 and the external electronic device 300 is established, an image provided by the video application 128 may be acquired from the external camera of the external electronic device 300. Therefore, since the camera module 180 of the electronic device 101 is not involved in providing the image, it may not be necessary to implement high performance. However, since a reception target of a first capture command recognized by the video application 128 corresponds to the camera module 180, the camera module 180 may need to be in an on state according to at least the low-power mode rather than in an off state. Due to the low-power mode, additional power consumption caused by the camera module 180 may be reduced when the connection between the electronic device 101 and the external electronic device 300 is established.

Meanwhile, the electronic device 101 according to an embodiment may repeatedly perform processes of capture command conversion 1003, image conversion 1004, and metadata conversion 1005 until a stop command is received (operation 1006).

For example, the conversion module 228 of the electronic device 101 may acquire the first capture command delivered to a framework of an operating system through an API of the video application 128, and may convert the acquired first capture command into the second capture command in a format compatible with the external camera of the external electronic device 300. The conversion module 228 may deliver the second capture command to the external electronic device 300, causing the electronic device 101 to acquire the image acquired from the external camera of the external electronic device 300. The conversion module 228 according to an embodiment may convert the image acquired from the external camera and provide the converted image to the video application 128, and may also convert metadata, which is a result value of the capture, into a format compatible with the camera module 180 and provide it to the video application 128.

Upon receiving the stop command (Yes in operation 1006), the electronic device 101 according to an embodiment may switch the camera module 180 from the low-power mode to a normal mode (operation 1007).

Upon receiving the stop command (Yes in operation 1006), the electronic device 101 according to an embodiment may either switch the camera interworking with the video application 128 from the external electronic device 300 to the camera module 180, or terminate the video application 128 (operation 1008).

Upon receiving the stop command (Yes in operation 1006), the electronic device 101 according to an embodiment may switch the camera module 180 to the normal mode and switch the camera interworking with the video application 128 from the external electronic device 300 to the camera module 180.

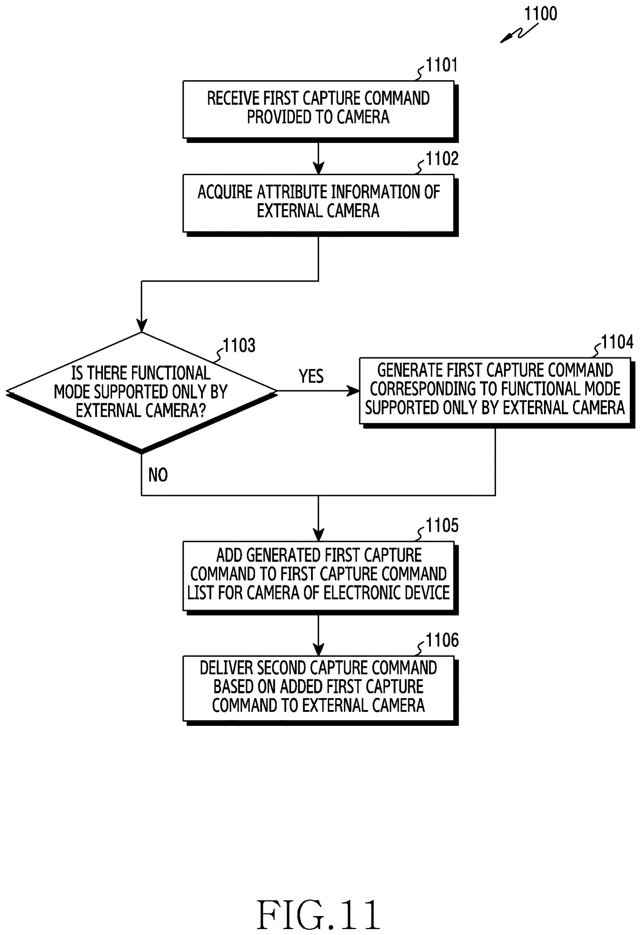

FIG. 11 is a flowchart 1100 illustrating a process in which an electronic device according to an embodiment generates a new capture command to be provided to an external electronic device. Each operation of FIG. 11 may be at least one operation performed by the electronic device 101 by being executed by the processor 120 (see FIG. 1).

Upon receiving a first capture command provided to the camera module 180 (operation 1101), the electronic device 101 according to an embodiment may acquire (or receive) attribute information on an external camera of the external electronic device 300 (operation 1102). In this case, the attribute information may include functions supported by the external camera and/or command codes corresponding to the supported functions. The electronic device 101 may acquire the attribute information from the external electronic device 300 to identify which functions are commonly supported by both the electronic device 101 and the external electronic device 300. For example, based on the attribute information of the external electronic device 300, the electronic device 101 may identify functional modes supported by the electronic device 101 but not supported by the external electronic device 300, and/or functional modes not supported by the electronic device 101 but supported by the external electronic device 300.

If there is a functional mode supported only by the external camera (Yes in operation 1103), the conversion module 228 of the electronic device 101 may generate a new first capture command corresponding to the functional mode supported only by the external camera (operation 1104). For example, if the external camera of the external electronic device 300 supports an Auto Focus (AF) function, but the camera module 180 of the electronic device 101 does not support the AF function, the first capture command corresponding to the AF function which is a trigger for executing the AF function may not exist in the electronic device 101. In this case, the conversion module 228 of the electronic device 101 according to an embodiment may generate the new first capture command by adding any missing commands, and by performing a fallback and/or emulation process to replace unsupported commands with compatible commands.

The electronic device 101 according to an embodiment may add the generated first capture command to a first capture command list for the camera module 180 (operation 1105).

The electronic device 101 according to an embodiment may deliver a second capture command based on the added first capture command to the external camera (operation 1106), thereby acquiring video through the external electronic device 300.

Meanwhile, the attribute information may include types of commands supported by the camera (the camera module 180 and/or the external camera). When an interface for controlling the camera does not support a configuration of basic commands for capture, the electronic device 101 according to an embodiment may configure the basic commands for capture by assigning all types of supported commands to default values defined in the interface. In this case, the electronic device 101 according to an embodiment may identify which commands are missing by comparing the commands acquired through the conversion process with the basic commands.

Since interfaces for controlling the camera module 180 and the external camera of the external electronic device 300 are different during the conversion process, there may be differences among commands for setting or controlling the same functional mode. The electronic device 101 according to an embodiment may include a capture command conversion table (see Table 1) in which definitions on the interfaces of the camera module 180 corresponding to modes for all camera functions and definitions on the interface of the external camera are assigned.

**[Table 1]**

| Func tion-specific Mode | Internal Interface (Android HAL) | First Priority External Interface (USB v412 interface) | Second Priority (fallback) External Interface (USB v412 interface) |
|---|---|---|---|
| AF AUTO | ANDROID_CONTROL_AF_MODE_ AUTO | V4L2_CID_FO CUS_AUTO true | V4L2_CID_F OCUS_AUTO false |
| AF OFF | ANDROID_CONTROL_AF_MODE_ OFF | V4L2_CID_FO CUS_AUTO false | V4L2_CID_F OCUS_AUTO false |
| AF Continuous | ANDROID_CONTROL_AF_MODE_ CONTINUOUS_PICTURE | V4L2_CID_FO CUS_AUTO true | V4L2_CID_F OCUS_AUTO false |
| ... | ... | ... | ... |
| Scene Mode Back light | ANDROID_CONTROL_SCENE _MO DE_DISABLED | V4L2_SCENE _MODE_SUN SET | V4L2_SCEN E_MODE_N ONE |
| Scene Mode Thea | ANDROID_CONTROL_SCENE_MO DE_THEATRE | V4L2_SCENE _MODE_NONE | V4L2_SCEN E_MODE_N ONE |
| ter | | | |
| ... | ... | ... | ... |
| Bokeh On | ANDROID_CONTROL_EXTENDE D_SCENE_MODE_BOKEH _CONTI NUOUS | Not Supported | Not Supported |
| Bokeh Off | ANDROID_CONTROL_EXTENDE D_SCENE_MODE_DISABLED | Not Supported | Not Supported |

Referring to Table 1, the capture command conversion table according to an embodiment may be stored in the memory 130 (see FIG. 1), based on priority, in consideration of differences in interfaces existing even in the same function-specific mode. However, the capture command conversion table based on Table 1 is merely one example, and may be defined variously depending on the specifications of the electronic device 101 and the types of the external electronic device 300.

The capture command conversion table of the electronic device 101 according to an embodiment may be automatically generated when the external camera is connected, or may be pre-stored in the memory.

Upon receiving a first capture command, the conversion module 228 according to an embodiment may refer to the capture command conversion table to identify a first-priority command, which corresponds to a function-specific mode corresponding to the first capture command and which is associated with the interface of the external electronic device 300, and may refer to attribute information acquired from the external electronic device 300 to determine whether the identified command is supported by the external electronic device 300.

When the external electronic device 300 is supported by the first-priority command, the conversion module 228 according to an embodiment may convert the first capture command into the second capture command, based on the first-priority command.

When the first-priority command is not supported by the external electronic device 300, the conversion module 228 according to an embodiment may depend on a next-priority command, i.e., a second-priority command. For example, when the first-priority command is not supported by the external electronic device 300, the conversion module 228 according to an embodiment may perform a fallback to the next-priority command. According to Table 1, the next-priority command corresponds to the second-priority command. The second-priority command is a lowest-priority command and is configured to include a default value defined in the corresponding interface. The conversion from the first capture command to the second capture command may be performed using the corresponding command.

For example, in case of "Bokeh," which is one of the function-specific modes of Table 1, since it is not supported by the interface of the external electronic device 300, this may correspond to a case where replacement with another command is not possible. In this case, the conversion table may indicate that the corresponding interface is not supported, and the conversion module 228 may omit the corresponding command during the conversion process.

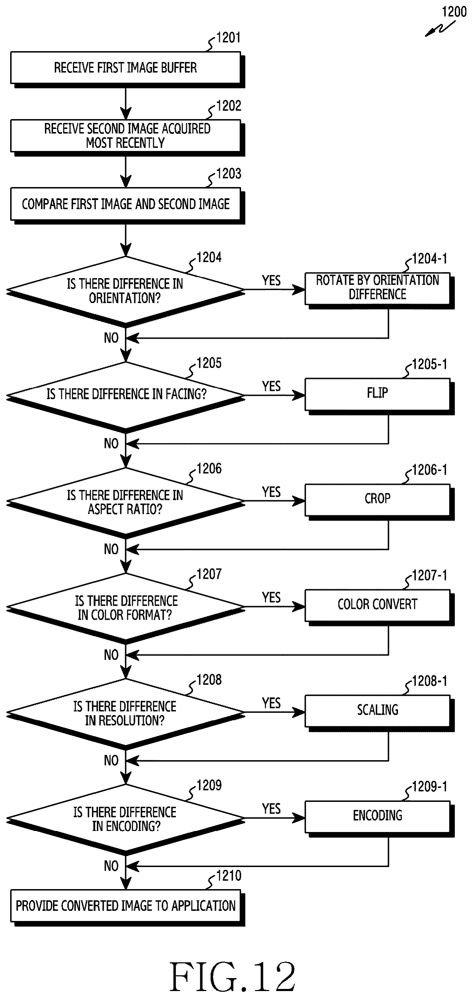

FIG. 12 is a flowchart 1200 illustrating a process in which an electronic device according to an embodiment converts an image acquired from an external electronic device. Each operation of FIG. 12 may be at least one operation performed by the electronic device 101 by being executed by the processor 120 (see FIG. 1).

The electronic device 101 according to an embodiment may receive a first image buffer of the camera module 180 (operation 1201). The first image buffer may correspond to a temporary storage area for storing image data acquired from the camera module 180 of the electronic device 101. For example, the first image buffer may be included in a memory inside a processor (e.g., the processor 120 of FIG. 1), or may be included in a memory (e.g., the memory 130 of FIG. 1) outside the processor 120.

The electronic device 101 according to an embodiment may receive a second image most recently acquired by the conversion module 228 (operation 1202).

The electronic device 101 according to an embodiment may compare the first image acquired by the camera module 180, which is stored in the first image buffer, with the second image acquired by the conversion module 228 (operation 1203).

The operation 1203 considers differences between the image acquired by the camera module 180 and the image acquired by the external camera of the external electronic device 300, and may include a process of converting the image so as to conform to the existing specifications of the video application 128 of the electronic device 101.

The conversion module 228 of the electronic device 101 according to an embodiment may compare the first image and the second image to determine whether differences exist between the two images in terms of orientation (operation 1204), facing (operation 1205), aspect ratio (operation 1206), color format (operation 1207), resolution (operation 1208), and encoding (operation 1209).

If there is a difference in the orientation between the first image and the second image (Yes in operation 1204), the conversion module 228 of the electronic device 101 may rotate the second image by an amount corresponding to the orientation difference (operation 1204-1).

If there is a difference in the facing between the first image and the second image (Yes in operation 1205), the conversion module 228 of the electronic device 101 according to an embodiment may flip the second image (operation 1205-1).

If there is a difference in the aspect ratio between the first image and the second image (Yes in operation 1206), the conversion module 228 of the electronic device 101 according to an embodiment may crop the second image so as to match the aspect ratio of the first image (operation 1206-1).

If there is a difference in the color format between the first image and the second image (Yes in operation 1207), the conversion module 228 of the electronic device 101 may convert the color format of the second image to match the color format of the first image by performing a color conversion process on the second image (operation 1207-1).

If there is a difference in the resolution between the first image and the second image (Yes in operation 1208), the conversion module 228 of the electronic device 101 according to an embodiment may convert the second image so as to match the resolution of the first image by scaling the second image (operation 1208-1).

If there is a difference in the encoding between the first image and the second image (Yes in operation 1209), the conversion module 228 of the electronic device 101 according to an embodiment may encode the second image (operation 1209-1).

As described above, the conversion module 228 of the electronic device 101 according to an embodiment may convert the second image into the first image by performing at least one of the operations 1204 to 1209. Herein, the second image may correspond to image data conforming to the specifications of the external camera of the external electronic device 300, and the first image may correspond to image data conforming to the specifications of the camera module of the electronic device 101.

The conversion module 228 of the electronic device 101 according to an embodiment may provide the converted image to an application (such as the video application 128) (operation 1210). The conversion module 228 may overwrite the image buffer of the camera module 180 with the second image, and the image buffer may be provided to the application.

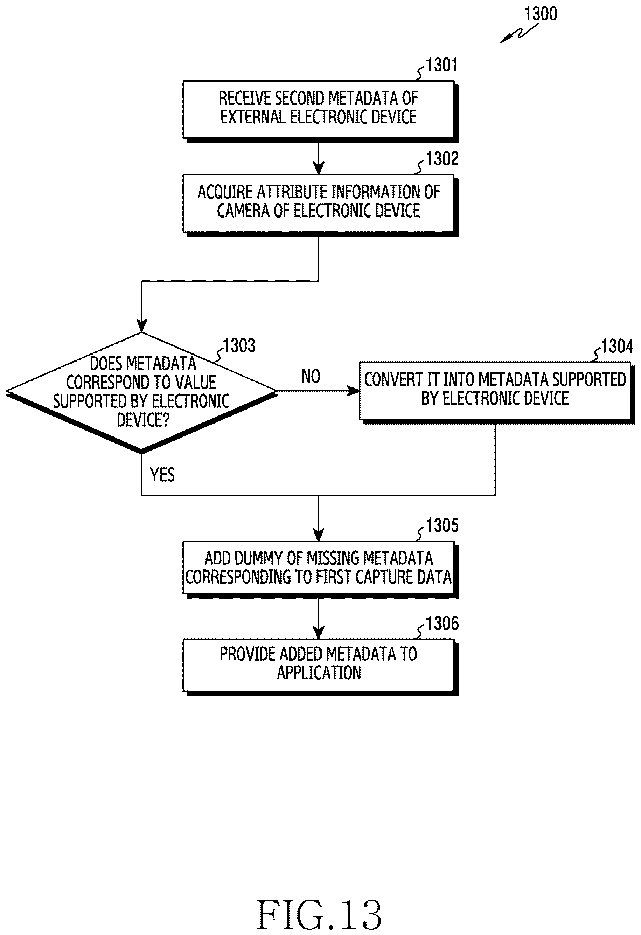

FIG. 13 is a flowchart 1300 illustrating a process in which an electronic device according to an embodiment converts metadata corresponding to an external electronic device. Each operation of FIG. 13 may be at least one operation performed by the electronic device 101 by being executed by the processor 120 (see FIG. 1).

The conversion process according to FIG. 13 may correspond to a process of converting metadata for a capture result, when the capture is performed by the external electronic device 300 in such a manner that a first capture command is subjected to the conversion module 228 and a second capture command is delivered to the external electronic device 300. An example of metadata referenced in the embodiment refers to Table 2 below.

**[Table 2]**

| Picture Size | Captured Image Resolution |
|---|---|
| Active Array | Maximum Resolution of the Image Sensor |
| Flash State | Flash Emission Status |
| AF State | AF Status Value (Focused, Not Focused, Searching etc) |
| AWB State | Auto White Balance (AWB) Status Value (Converged, Searching, Locked etc) |
| Flash Mode | Flash Mode (Single, Continuous, Off etc) |
| AF Mode | AF Mode (On, Off, Continuous etc) |
| AE Mode | AE Mode (Auto, Manual etc) |
| Crop Region | Zoom Area |
| Zoom Ratio | Zoom Magnification |
| HDR Mode | High Dynamic Range (HDR) Setting |
| VDIS Mode | Image Stabilization Setting for Video Recording |
| OIS | Optical Image Stabilization (OIS) Setting |

The conversion module 228 of the electronic device 101 according to an embodiment may receive second metadata from the external electronic device 300 (operation 1301). When the external camera of the external electronic device 300 acquires the second image, the second metadata may correspond to result values which define various attributes for the second image according to the specification of the external electronic device 300.

The conversion module 228 of the electronic device 101 according to an embodiment may acquire (or receive) attribute information of the camera module 180 of the electronic device 101 (operation 1302). In this case, the attribute information may include a function supported by the camera module 180 of the electronic device 101 and image attribute information of the first image of the camera, which is a result value corresponding to the supported function.

If the metadata (the second metadata) is not a value supported by the electronic device 101 (No in operation 1303), the conversion module 228 of the electronic device 101 according to an embodiment may convert it into metadata (first metadata) supported by the electronic device 101 (operation 1304).

The conversion module 228 of the electronic device 101 according to an embodiment may add a dummy for missing metadata corresponding to the first capture command (operation 1305). For example, the conversion module 228 of the electronic device 101 according to an embodiment may compare the second metadata acquired from the external camera with the image attribute information of the camera module 180. If the second metadata is an unsupported result value, the metadata is converted through a fallback and/or emulation process. If the camera module 180 requires metadata or if there is missing metadata, a dummy of the metadata may be added to ensure compatibility during the conversion process.

The conversion module 228 of the electronic device 101 according to an embodiment may provide the added metadata to an application (the video application 128) (operation 1306).

Meanwhile, the conversion module 228 of the electronic device 101 according to an embodiment may configure the first metadata of the camera module 180 by using the metadata conversion table with priority even in a process of converting the second metadata to the first metadata compatible with the camera module 180 (see Table 3).

Referring to Table 3, the metadata conversion table according to an embodiment may be stored in the memory 130 (see FIG. 1), based on the priority, considering that there are differences in interfaces for the same function-specific mode. However, the metadata conversion table based on Table 3 is merely one example, and may be variously defined according to specifications of the electronic device 101 and types of the external electronic device 300.

The metadata conversion table of the electronic device 101 according to an embodiment may be automatically generated when the external camera is connected, or may be pre-stored in the memory.

Upon receiving the second metadata, the conversion module 228 according to an embodiment may refer to the metadata conversion table to identify a first-priority result value corresponding to the interface of the camera module 180, which corresponds to a function-specific mode, and may refer to the attribute information acquired from the camera module 180 to determine whether the corresponding result value is a result value supported by the camera module 180.

When the first-priority value is supported by the camera module 180, the conversion module 228 according to an embodiment may convert the second metadata into the first metadata, based on the first-priority result value.

When the first-priority result value is not supported by the camera module 180, the conversion module 228 according to an embodiment may identify a next-priority value, i.e., a second-priority value. For example, when the first-priority result value is not supported by the camera module 180, the conversion module 228 according to an embodiment may perform a fallback to a next-priority command. According to Table 3, the next-priority result value corresponds to the second-priority result value. The second-priority result value is a lowest-priority result value and is configured to include a default value defined in the corresponding interface. The conversion from the second metadata to the first metadata may be performed using the corresponding result value.

**[Table 3]**

| Fun ctio n-spec ific Mo de Res ult | Definition of External Interface | First Priority: Definition of Internal Interface | Second Priority (Fallback): Definition of Internal Interface |
|---|---|---|---|
| AF | V4L2_AUTO_FO | ANDROID_CONTROL_A | ANDROID_CONTR |
| Inac tive | CUS_STATUS_ID LE | F_STATE_INACTIVE | OL_AF_STATE_INA CTIVE |
| AF Foc used | V4L2_ AUTO_FO CUS_STATUS_R EACHED | ANDROID_CONTROL_A F_STATE_FOCUSED_LO CKED | ANDROID_CONTR OL_AF_STATE_INA CTIVE |
| AE Scan | V4L2_AUTO_FO CUS_STATUS _B USY | ANDROID_CONTROL_A F_STATE_ACTIVE_SCA N | ANDROID_CONTR OL_AF_STATE_INA CTIVE |
| AF Not Foc used | V4L2_AUTO_FO CUS_STATUS_F AILED | ANDROID_CONTROL_A F_STATE_NOT_FOCUSE D_LOCKED | ANDROID_CONTR OL_AF_STATE_INA CTIVE |
| ... | ... | ... | ... |
| AE Search | Not Supported | ANDROID_CONTROL_A E_STATE _CONVERGED | ANDROID_CONTR OL_AE_STATE_CO NVERGED |
| AE Con verged | Not Supported | ANDROID_CONTROL_A E_STATE_CONVERGED | ANDROID_CONTR OL_AE_STATE_CO NVERGED |
| ... | ... | ... | ... |

Additionally, if metadata corresponds to a result value not supported by the external camera of the external electronic device 300, such as AE result values (AE_Search, AE_Converged) of the conversion table, some result values may be missing in first metadata configured through the conversion process. In this case, the missing result value may be identified by comparing the first metadata configured through the conversion process with the first metadata captured and delivered by the camera module 180. The missing result values may be copied from the first metadata delivered from the camera module 180, or may be substituted with default result values of the missing result values, thereby finally completing the conversion.

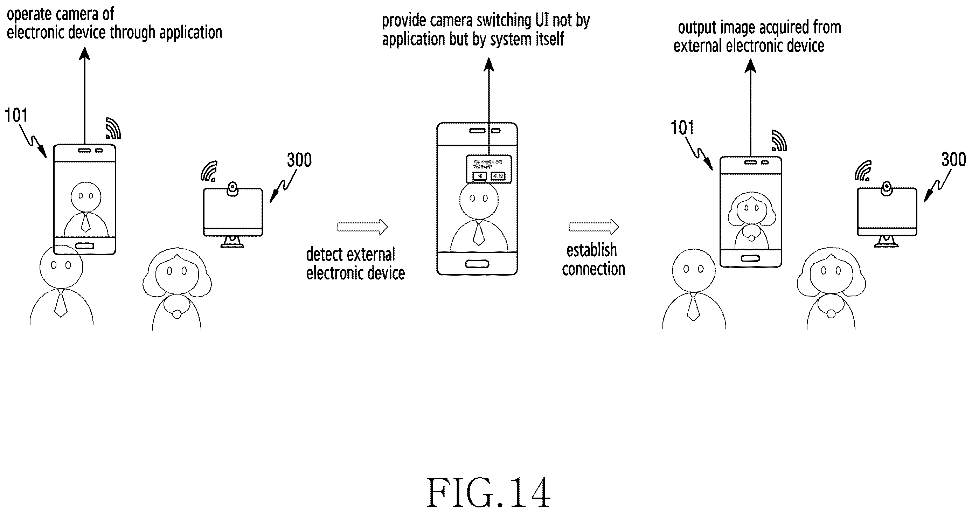

FIG. 14 illustrates an example in which an electronic device according to an embodiment establishes a connection with an external electronic device, and a camera is switched to change an output screen.

Referring to FIG. 14, when a user executes an application (the video application 128), the electronic device 101 may operate the camera module 180 (see FIG. 4 to FIG. 6) embedded in the electronic device 101. The electronic device 101 according to an embodiment may detect the external electronic device 300, based on a signal produced by the external electronic device 300 including an external camera. The electronic device 101 according to an embodiment may output a UI (e.g., the notification 800 of FIG. 8) for attempting to switch the camera, in response to detecting the external electronic device 300. In this case, the UI provided by the electronic device 101 may be based on a system command of the electronic device 101.

Upon receiving a user input for establishing a connection (including wired/wireless connections), the electronic device 101 according to an embodiment may perform at least one of the followings, as described above: (1) conversion for a capture command; 2) conversion for an image; and 3) conversion for metadata. By performing the conversion process, an image provided by the application may be an image acquired from the external camera of the external electronic device 300, rather than an image acquired by the camera module 180. Therefore, the electronic device 101 may provide a control command to the external electronic device 300 through the conventional capture command, and may provide the application with the image of the external camera, based on the control command.

This disclosure aims to provide an electronic device and an operation method thereof for controlling an external electronic device through the existing application, without requiring a separate application for controlling the external electronic device.

Technical objectives to be achieved in the disclosure are not limited to the technical objectives mentioned above, and other technical objectives not mentioned herein may be clearly understood by those skilled in the art to which the disclosure pertains from the following descriptions.

An electronic device and an operation method thereof according to an embodiment do not require a separate application to be installed or converted for an external electronic device, allowing a user to easily utilize the external electronic device.

Advantages acquired in the disclosure are not limited to the aforementioned advantages, and other advantages not mentioned herein may be clearly understood by those skilled in the art to which the disclosure pertains from the following descriptions.

An electronic device (e.g., the electronic device 101 of FIG. 1, FIG. 4 to FIG. 6) according to an embodiment may include a camera (the camera module 180 of FIG. 1), a communication circuit (the communication module 190 of FIG. 1) which communicates with an external electronic device equipped with an external camera, a memory (the memory 130 of FIG. 1) which stores an application providing a function using the camera, and at least one processor (the processor 120 of FIG. 1) electrically coupled with the camera, the communication circuit, and the memory. While the application (the video application 128 of FIG. 4 to FIG. 6) is running, the electronic device may establish a connection between the electronic device and the external electronic device through the communication circuit. Upon detecting a first capture command to be provided to the camera, the electronic device may convert the first capture command into a second capture command to be provided to the external electronic device. The electronic device may be configured to cause the application to acquire an image acquired by the external camera, based on the second capture command.

The electronic device (e.g., the electronic device 101 of FIG. 1, FIG. 4 to FIG. 6) according to an embodiment may further include a display (the display module 160 of FIG. 1). Upon detecting the connection between the electronic device and the external electronic device while the camera is operating, the electronic device may output on the display a notification asking whether to switch from the camera to the external camera. Upon receiving a user input for establishing the connection, the electronic device may be configured to convert the first capture command into the second capture command.

Upon receiving the user input for establishing the connection while outputting a first image obtained by the camera on the display, the electronic device (e.g., the electronic device 101 of FIG. 1, FIG. 4 to FIG. 6) according to an embodiment may acquire a second image acquired by the external camera. The electronic device may control the display to switch from the first image to the second image.

Upon receiving the user input, the electronic device (e.g., the electronic device 101 of FIG. 1, FIG. 4 to FIG. 6) according to an embodiment may be configured to switch a power mode of the camera, which is operating under the control of the application, to a low-power mode.

When a functional mode corresponding to the first capture command is not supported by the external camera, the electronic device (e.g., the electronic device 101 of FIG. 1, FIG. 4 to FIG. 6) according to an embodiment may perform a fallback process in response to the first capture command to generate a dummy command. The electronic device may be configured to provide the external camera with the second capture command which is the dummy command.

When the functional mode supported by the external camera is not included in a plurality of functional modes supported by the camera, the electronic device (e.g., the electronic device 101 of FIG. 1, FIG. 4 to FIG. 6) according to an embodiment may be configured to generate the first capture command corresponding to the functional mode supported by the external camera.

When the connection is established between the electronic device and the external electronic device, the electronic device (e.g., the electronic device 101 of FIG. 1, FIG. 4 to FIG. 6) according to an embodiment may acquire attribute information of the external camera, which includes the plurality of functional modes respectively corresponding to the plurality of second capture commands. The electronic device may be configured to generate the first capture command corresponding to the functional mode supported by the external camera, based on comparison between the attribute mode and the functional mode corresponding to the first capture mode.

The electronic device (e.g., the electronic device 101 of FIG. 1, FIG. 4 to FIG. 6) according to an embodiment may acquire an image buffer corresponding to the camera. The electronic device may acquire an image acquired by the external camera. The electronic device may be configured to convert the image acquired by the external camera, based on an image attribute included in the image buffer, and provide the converted image to the application.

The electronic device (e.g., the electronic device 101 of FIG. 1, FIG. 4 to FIG. 6) according to an embodiment may be configured to acquire metadata for the converted image.

Upon acquiring the metadata, the electronic device (e.g., the electronic device 101 of FIG. 1, FIG. 4 to FIG. 6) according to an embodiment may acquire image attribute information of the camera, which represents result values of the plurality of functional modes respectively corresponding to the plurality of first capture commands. The electronic device may be configured to convert the metadata, based on comparison between the metadata and the image attribute information.

A method of operating an electronic device (e.g., the electronic device 101 of FIG. 1, FIG. 4 to FIG. 6) according to an embodiment may include, while an application is running, establishing a connection between the electronic device and an external electronic device including an external camera. The operation method may include, upon detecting a first capture command to be provided to the camera, converting the first capture command into a second capture command to be provided to the external electronic device. The operation method may further include causing the application to acquire an image acquired by the external camera, based on the second capture command.

The method of operating the electronic device (e.g., the electronic device 101 of FIG. 1, FIG. 4 to FIG. 6) according to an embodiment may further include detecting the connection between the electronic device and the external electronic device while the camera is operating. The operation method may further include outputting on the display a notification asking whether to switch from the camera to the external camera. The operation method may further include, upon receiving a user input for establishing the connection, converting the first capture command into the second capture command.

The method of operating the electronic device (e.g., the electronic device 101 of FIG. 1, FIG. 4 to FIG. 6) according to an embodiment may further include, while outputting a first image obtained by the camera on the display, upon receiving the user input for establishing the connection, acquiring a second image acquired by the external camera. The operation method may further include controlling the display to switch from the first image to the second image.

The method of operating the electronic device (e.g., the electronic device 101 of FIG. 1, FIG. 4 to FIG. 6) according to an embodiment may further include, upon receiving the user input, switching a power mode of the camera, which is operating under the control of the application, to a low-power mode.

The method of operating the electronic device (e.g., the electronic device 101 of FIG. 1, FIG. 4 to FIG. 6) according to an embodiment may further include, when a functional mode corresponding to the first capture command is not supported by the external camera, performing a fallback process in response to the first capture command to generate a dummy command. The operation method may further include providing the external camera with the second capture command which is the dummy command.

The method of operating the electronic device (e.g., the electronic device 101 of FIG. 1, FIG. 4 to FIG. 6) according to an embodiment may further include, when the functional mode supported by the external camera is not included in a plurality of functional modes supported by the camera, generating the first capture command corresponding to the functional mode supported by the external camera.

The method of operating the electronic device (e.g., the electronic device 101 of FIG. 1, FIG. 4 to FIG. 6) according to an embodiment may further include, when the connection is established between the electronic device and the external electronic device, acquiring attribute information of the external camera, which includes the plurality of functional modes respectively corresponding to the plurality of second capture commands. The operation method may further include generating the first capture command corresponding to the functional mode supported by the external camera, based on comparison between the attribute mode and the functional mode corresponding to the first capture mode.

The method of operating the electronic device (e.g., the electronic device 101 of FIG. 1, FIG. 4 to FIG. 6) according to an embodiment may further include acquiring an image buffer corresponding to the camera. The operation method may further include acquiring an image acquired by the external camera. The operation method may further include converting the image acquired by the external camera, based on an image attribute included in the image buffer, and providing the converted image to the application.

The method of operating the electronic device (e.g., the electronic device 101 of FIG. 1, FIG. 4 to FIG. 6) according to an embodiment may further include acquiring metadata for the converted image.

The method of operating the electronic device (e.g., the electronic device 101 of FIG. 1, FIG. 4 to FIG. 6) according to an embodiment may further include, upon acquiring the metadata, acquiring image attribute information of the camera, which represents result values of the plurality of functional modes respectively corresponding to the plurality of first capture commands. The operation method may further include converting the metadata, based on comparison between the metadata and the image attribute information.

Methods based on the embodiments disclosed in the claims and/or specification of the disclosure may be implemented in hardware, software, or a combination of both.

When implemented in software, a computer readable recording medium for storing one or more programs (i.e., software modules) may be provided. The one or more programs stored in the computer readable recording medium are configured for execution performed by one or more processors in the electronic device. The one or more programs include instructions for allowing the electronic device to execute the methods based on the embodiments disclosed in the claims and/or specification of the disclosure.

In the disclosure, programs (e.g., software modules or software) may be stored in a random access memory and/or a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs), other forms of optical storage devices, or a magnetic cassette. Alternatively, the program may be stored in a memory configured in combination of all or some of these storage media. In addition, the configured memory may be plural in number.

Further, the program may be stored in an attachable storage device capable of accessing the electronic device through a communication network such as the Internet, an Intranet, a Local Area Network (LAN), a Wide LAN (WLAN), or a Storage Area Network (SAN) or a communication network configured by combining the networks. The storage device may have access to a device for performing an embodiment of the disclosure via an external port. In addition, an additional storage device on a communication network may have access to the device for performing the embodiment of the disclosure.

In the aforementioned specific embodiments of the disclosure, a component included in the disclosure is expressed in a singular or plural form according to the specific embodiment proposed herein. However, the singular or plural expression is selected properly for a situation proposed for the convenience of explanation, and thus the various embodiments of the disclosure are not limited to a single or a plurality of components. Therefore, a component expressed in a plural form may also be expressed in a singular form, or vice versa.

In addition, in the disclosure, the term "unit", "module", or the like may be a hardware component such as a processor or a circuit, and/or a software component executed by the hardware component such as the processor.

The "unit" and the "module" may be implemented by a program stored in an addressable storage medium and executable by the processor. For example, the "unit" and "module" may be implemented by software components, object-oriented software components, class components, and task components, processes, functions, attributes, procedures, subroutines, segments of program code, drivers, firmware, microcode, circuitry, data, databases, data structures, tables, arrays, and variables.

Specific implementations described in the disclosure are only one embodiment, and do not limit the scope of the disclosure in any way. For brevity of the specification, descriptions on the conventional electronic components, control systems, software, and other functional aspects of the systems may be omitted.

In addition, in the disclosure, "including at least one of a, b, or c" may mean "including only a", "including only b", "including only c", "including a and b", "including b and c", " including a and c", or "including a, b, and c".

While the disclosure has been shown and described with reference to certain preferred embodiments thereof, it will be understood by those skilled in the art that various changes in form and details may be made therein without departing from the spirit and scope of the disclosure as defined by the appended claims. Therefore, the scope of the disclosure is defined not by the detailed description thereof but by the appended claims, and all differences within equivalents of the scope will be construed as being included in the disclosure.

## Claims

1. An electronic device comprising:
a camera;
a communication circuit which communicates with an external electronic device equipped with an external camera;
a memory which stores an application providing a function using the camera; and
at least one processor electrically coupled with the camera, the communication circuit, and the memory,
wherein the at least one processor is configured to, while the application is running:
establish a connection between the electronic device and the external electronic device through the communication circuit;
upon detecting a first capture command to be provided to the camera, convert the first capture command into a second capture command to be provided to the external electronic device; and
cause the application to acquire an image acquired by the external camera, based on the second capture command.

2. The electronic device of claim 1, further comprising
a display,
wherein the at least one processor is configured to, upon detecting the connection between the electronic device and the external electronic device while the camera is operating:
output on the display a notification asking whether to switch from the camera to the external camera; and
upon receiving a user input for establishing the connection, convert the first capture command into the second capture command.

3. The electronic device of claim 2, wherein the at least one processor is configured to, while outputting a first image obtained by the camera on the display:
upon receiving the user input for establishing the connection, acquire a second image acquired by the external camera; and
control the display to switch from the first image to the second image.

4. The electronic device of claim 2, wherein the at least one processor is configured to, upon receiving the user input, switch a power mode of the camera, which is operating under the control of the application, to a low-power mode.

5. The electronic device of claim 1, wherein the at least one processor is configured to:
when a functional mode corresponding to the first capture command is not supported by the external camera, perform a fallback process in response to the first capture command to generate a dummy command, and
provide the external camera with the second capture command which is the dummy command.

6. The electronic device of claim 1, wherein the at least one processor is configured to, when the functional mode supported by the external camera is not included in a plurality of functional modes supported by the camera, generate the first capture command corresponding to the functional mode supported by the external camera.

7. The electronic device of claim 6, wherein the at least one processor is configured to:
when the connection is established between the electronic device and the external electronic device, acquire attribute information of the external camera, which includes the plurality of functional modes respectively corresponding to the plurality of second capture commands; and
generate the first capture command corresponding to the functional mode supported by the external camera, based on comparison between the attribute mode and the functional mode corresponding to the first capture mode.

8. The electronic device of claim 1, wherein the at least one processor is configured to:
acquire an image buffer corresponding to the camera;
acquire an image acquired by the external camera; and
convert the image acquired by the external camera, based on an image attribute included in the image buffer, and provide the converted image to the application.

9. The electronic device of claim 8, wherein the at least one processor is configured to acquire metadata for the converted image.

10. The electronic device of claim 9, wherein the at least one processor is configured to:
upon acquiring the metadata, acquire image attribute information of the camera, which represents result values of the plurality of functional modes respectively corresponding to the plurality of first capture commands; and
convert the metadata, based on comparison between the metadata and the image attribute information.

11. A method of operating an electronic device, comprising:
while an application is running, establishing a connection between the electronic device and an external electronic device including an external camera;
upon detecting a first capture command to be provided to the camera, converting the first capture command into a second capture command to be provided to the external electronic device; and
causing the application to acquire an image acquired by the external camera, based on the second capture command.

12. The method of claim 11, further comprising:
detecting the connection between the electronic device and the external electronic device while the camera is operating;
outputting on the display a notification asking whether to switch from the camera to the external camera; and
upon receiving a user input for establishing the connection, converting the first capture command into the second capture command.

13. The method of claim 12, further comprising:
while outputting a first image obtained by the camera on the display, upon receiving the user input for establishing the connection, acquiring a second image acquired by the external camera; and
controlling the display to switch from the first image to the second image.

14. The method of claim 12, further comprising, upon receiving the user input, switching a power mode of the camera, which is operating under the control of the application, to a low-power mode.

15. The method of claim 11, further comprising:
when a functional mode corresponding to the first capture command is not supported by the external camera, performing a fallback process in response to the first capture command to generate a dummy command; and
providing the external camera with the second capture command which is the dummy command.
